# EUROPÄISCHE PATENTSCHRIFT

(11) **EP 3 054 786 B1**
(45) Veröffentlichungstag und Bekanntmachung des Hinweises auf die Patenterteilung: **23.05.2018**
(21) Anmeldenummer: 14771189.9
(22) Anmeldetag: 07.08.2014
(51) Int. Cl.: A23L 2/02, A23L 2/52

(54) **TOPINAMBUR-GETRÄNK**
JERUSALEM ARTICHOKE DRINK
BOISSON À BASE DE TOPINAMBOUR

(30) Priorität: 04.10.2013 DE 102013220111
(43) Veröffentlichungstag der Anmeldung: 17.08.2016
(73) Patentinhaber: BRIU GmbH, 61462 Königstein (DE)
(72) Erfinder: ROSE, Uwe-Bernd, 61462 Königstein (DE)
(74) Vertreter: Patent- und Rechtsanwälte Ullrich & Naumann
(86) Internationale Anmeldenummer: PCT/DE2014/200387
(87) Internationale Veröffentlichungsnummer: WO 2015/048949

(56) Entgegenhaltungen:
- WO-A1-2014/026782
- DE-A1- 4 426 662
- DE-A1- 19 546 150
- DE-A1-102007 023 526
- DE-C1- 3 508 387
- DE-U1- 9 420 187

## Beschreibung

Die Erfindung betrifft ein Topinambur-Getränk.

Die Topinamburpflanze enthält Inulin, das als appetitzügelnder Wirkstoff im Stand der Technik bekannt ist.

DE 10 2007 023 526 A1 offenbart ein alkoholfreies Getränk, hergestellt aus einer wässrigen Mischung von Extrakten aus den Kartoffelwurzelknollen, Extrakten aus der Peperonifrucht, Extrakten aus Meerrettichwurzeln, Frucht- und/oder Essigsäuren, Zucker und Salz. Des Weiteren ist dort ein Verfahren zu Herstellung eines solchen alkoholfreien Getränks offenbart.

DE 35 08 387 C1 offenbart ein Verfahren zur Herstellung eines glukosearmen Aufschlussproduktes aus inulinhaltigen Pflanzenteilen.

DE 44 26 662 A1 offenbart ein Verfahren zur Herstellung eines inulin-, fructose- und glukosehaltigen Saftes, insbesondere aus Topinamburknollen gewonnener Saft für Obst- und Gemüsezubereitungen.

DE 94 20 187 U1 offenbart flüssige Topinamburknollenerzeugnisse enthaltende Obst- und Gemüsemischsäfte bzw. -getränke.

DE 195 46 150 A1 offenbart ein Verfahren zur Herstellung von Topinambursäften oder Konzentraten daraus, die als Komponenten zur Herstellung kalorienreduzierter, ballaststoffreicher Mischsafterzeugnisse mit anderen Obst- und Gemüsenkomponenten (Mischsäfte, Mischgetränke) ohne Zusatz von Zucker, Süßstoffen und Salzen geeignet sind.

Der Erfindung liegt die Aufgabe zugrunde, ein Getränk der eingangsgenannten Art zu schaffen, das auf Basis natürlicher Einsatzstoffe eine appetitzügelnde Wirkung aufweist und für den Konsumenten sensorisch und geschmacklich akzeptabel ist.

Gelöst wird diese Aufgabe durch ein Getränk, das enthält:
a) wenigstens 50 Gew.-% Topinambursaft,
b) wenigstens 1 Gew."% eines Geschmacksträgers zur Überdeckung des Geschmacks von Cynarin,
c) 0,5 bis 7 Gew.-% Kieselsäure oder Kieselsäurederivate.

Zunächst seien einige im Rahmen der Erfindung verwendete Begriffe erläutert. Der Begriff Getränk ist im Rahmen der Erfindung weit zu verstehen und umfasst jede trinkbare Zusammensetzung einschließlich höher viskoser Zusammensetzungen oder Dispersionen wie beispielsweise Smoothies.

Erfindungsgemäß enthält das Getränk wenigstens 50 Gew.-% Topinambursaft, der als Presssaft aus Topinamburknollen erhältlich ist. Mittels dieses Topinambursafts kann Inulin auf Basis eines natürlichen Rohstoffs in das Getränk eingebracht werden.

Die Erfindung hat erkannt, dass Topinambursaft aufgrund des in der Topinamburpflanze enthaltenden Bitterstoffs Cynarin in das Getränk einen unerwünschten Bittergeschmack, der etwa einem Artischockengeschmack entspricht, einbringen kann. Cynarin ist ebenfalls in Artischocken enthalten.

Erfindungsgemäß ist daher vorgesehen, dass das Getränk bezogen auf seine Gesamtmasse wenigstens 1 Gew.-% eines Geschmacksträgers zur Überdeckung des Geschmacks von Cynarin enthält. Im Kontext dieser Erfindung besitzt ein solcher Geschmacksträger die Eignung, im fertigen Getränk den durch Cynarin hervorgerufenen unerwünschten Artischockengeschmack mindestens soweit zu überdecken, dass er vom Konsumenten nicht mehr als unangenehm empfunden wird.

Inulin wird im Magen-Darm-Trakt der meisten Menschen nicht abgebaut. Bei etwa einem Fünftel der Menschen enthält die Darmflora jedoch Enzyme, die Inulin abbauen können. Durch diesen Abbauprozess kann es zu Blähungen kommen.

Das Getränk enthält daher zusätzlich Mittel gegen Blähungen, die ausgewählt sind aus der Gruppe bestehend aus Kieselsäuren und Kieselsäurederivaten, weiter vorzugsweise Kieselerden oder Kieselgelen. Bevorzugt enthält das Getränk 0,5 bis 7 Gew.-%, weiter vorzugsweise 1 bis 5 Gew.-% Kieselerden oder Kieselgele.

Kern der Erfindung ist es somit, in ein Getränk das appetitzügelnde Inulin einerseits auf Basis eines natürlichen Rohstoffs (Topinambursaft) einzubringen und andererseits zwei damit verbundene nachteilige Folgen zum einen erkannt zu haben (unerwünschter Artischockengeschmack, Blähungen) und zum anderen zu kompensieren durch geeignete Zusatzstoffe (Geschmacksträger bzw. Kieselerden).

Der Geschmacksträger kann bevorzugt ausgewählt sein aus der Gruppe bestehend aus Fruchtsirupen und Fruchtsäften. Bevorzugt sind Mark oder Saft von Rotfrüchten, Apfeldicksaft, Birnendicksaft und Zitronensaft.

Alle diese Geschmacksträger besitzen die Eigenschaft, dass sie einerseits den unerwünschten, durch Cynarin hervorgerufenen Geschmacksanteil des Topinambursafts überdecken bzw. kompensieren und zum anderen vorteilhaft zum Geschmack des Getränks beitragen. Im Rahmen der Erfindung kann ein solcher Geschmacksträger gleichzeitig auch eine Funktion als Süßungsmittel ausüben, da Fruchtdicksäfte beispielsweise Zucker enthalten. Geeignet unter den Fruchtdicksäften und -sirupen sind beispielsweise Apfel- oder Birnendicksaft.

Der Anteil des Geschmacksträgers an dem Getränk beträgt bevorzugt 1 bis 15 Gew.-%, weiter vorzugsweise 2 bis 10 Gew.-%.

Der Anteil des Topinambursafts beträgt im Rahmen der Erfindung bevorzugt 50 bis 90 Gew.-%, weiter vorzugsweise 60 bis 90 Gew.-%, weiter vorzugsweise 70 bis 90 bzw. 80 bis 90 Gew.-%, Die Erfindung kann somit eine für die appetitzügelnde Wirkung wirksame Menge an Inulin in das Getränk einbringen, auf der anderen Seite wird dessen Geschmack für den Konsumenten nicht oder allenfalls in hinnehmbarer Weise beeinträchtigt.

Erfindungsgemäß kann das Getränk zusätzlich Topinambursirup enthalten. Es handelt sich dabei um ein Weiterverarbeitungsprodukt des Topinamburpresssafts, dieser wird bevorzugt im Volumenverhältnis 1:5 eingedickt. Durch das Eindicken kann auch der Saft in der Zusammensetzung verändert und insbesondere beispielsweise sein Fruktosegehalt erhöht werden.

Der Anteil an Tropinambursirup kann erfindungsgemäß 1 bis 15 Gew.-%, weiter vorzugsweise 2 bis 10 Gew.-%, weiter vorzugsweise 2 bis 5 Gew.-% betragen.

Erfindungsgemäß ist es möglich, dem Getränk die Konsistenz eines Smoothies zu verleihen und zu diesem Zweck Feststoffe darin zu dispergieren. Bevorzugt enthält es zu diesem Zweck zusätzlich Topinamburtrester, der beim Auspressen der Topinamburknolle entsteht und bevorzugt vor dem Zusetzen zu dem Getränk fein zerkleinert wird. Der Anteil des Topinamburtresters am Getränk kann erfindungsgemäß 5 bis 20 Gew.-%, weiter vorzugsweise 5 bis 10 Gew.-% betragen.

Ausführungsbeispiele der Erfindung werden nachfolgend erläutert.

### Beispiel 1

Ein erfindungsgemäßes Getränk wird durch Vermischen der folgenden Bestandteile hergestellt:
Topinamburpresssaft 89 Gew.-%
Topinambursirup 5 Gew.-%
Zitronensaft 2,5 Gew.-%
Kieselgel 3,5 Gew.-%

Man erhält ein verhältnismäßig dünnflüssiges Getränk mit einem hohen Inulinanteil auf Basis natürlicher Rohstoffe. Der Zusatz von Zitronensaft verbessert den Geschmack und überdeckt den unerwünschten Cynaringeschmack, der Zusatz von Kieselgel verhindert Blähungen bei denjenigen Personen, bei denen Inulin im Magen-Darm-Trakt abgebaut werden kann.

### Beispiel 2

In diesem Beispiel wird ein Smoothie hergestellt.

500 g Topinamburknollen werden entsaftet. Man erhält etwa 250 ml Presssaft und etwa 250 g Trester.

200 ml Presssaft, 40 g Trester, 13 g Kieselgel und 10 g Birnendicksaft werden in einem üblichen Mixer auf höchster Stufe etwa 3 Minuten gemischt und mit Wasser auf 250 ml aufgefüllt.

Man erhält eine viskose Flüssigkeit, deren Konsistenz den handelsüblichen Fruchtsmoothies entspricht. Die Farbe entspricht etwa der von Apfelmus.

## Patentansprüche

1. Getränk, **dadurch gekennzeichnet, dass** es enthält:
a) wenigstens 50 Gew.-% Topinambursaft,
b) wenigstens 1 Gew.-% eines Geschmacksträgers zur Überdeckung des Geschmacks von Cynarin,
c) 0,5 bis 7 Gew.-% Kieselsäure oder Kieselsäurederivate.

2. Getränk nach Anspruch 1, **dadurch gekennzeichnet, dass** der Geschmacksträger zur Überdeckung des Geschmacks von Cynarin ausgewählt ist aus der Gruppe bestehend aus Fruchtsirupen, Fruchtdicksäften, Fruchtmark, Fruchtsäften und Haselnusssirup.

3. Getränk nach Anspruch 2, **dadurch gekennzeichnet, dass** der Geschmacksträger zur Überdeckung des Geschmacks von Cynarin ausgewählt ist aus der Gruppe bestehend aus Mark oder Saft von Rotfrüchten, Apfeldicksaft, Birnendicksaft und Zitronensaft.

4. Getränk nach einem der Ansprüche 1 bis 3, **dadurch gekennzeichnet, dass** es 1 bis 15 Gew.-%, vorzugsweise 2 bis 10 Gew.-% eines Geschmacksträgers zur Überdeckung des Geschmacks von Cynarin enthält.

5. Getränk nach einem der Ansprüche 1 bis 4, **dadurch gekennzeichnet, dass** der Anteil des Topinambursafts 50 bis 90 Gew.-%, weiter vorzugsweise 60 bis 90 Gew.-%, weiter vorzugsweise 70 bis 90 Gew.-%, weiter vorzugsweise 80 bis 90 Gew.-% beträgt.

6. Getränk nach einem der Ansprüche 1 bis 5, **dadurch gekennzeichnet, dass** es zusätzlich Topinambursirup enthält.

7. Getränk nach Anspruch 6, **dadurch gekennzeichnet, dass** der Anteil an Topinambursirup 1 bis 15 Gew.-%, vorzugsweise 2 bis 10 Gew.-%, weiter vorzugsweise 2 bis 5 Gew.-% beträgt.

8. Getränk nach einem der Ansprüche 1 bis 7, **dadurch gekennzeichnet, dass** es 1 bis 5 Gew.-% Kieselerden oder Kieselgele enthält.

9. Getränk nach einem der Ansprüche 1 bis 8, **dadurch gekennzeichnet, dass** es zusätzlich Topinamburtrester enthält.

10. Getränk nach Anspruch 9, **dadurch gekennzeichnet, dass** der Anteil an Topinamburtrester 5 bis 20 Gew.-%, vorzugsweise 5 bis 10 Gew.-% beträgt.

11. Getränk nach Anspruch 9 oder 10, **dadurch gekennzeichnet, dass** der Topinamburtrester fein zerkleinert ist.

## Claims

1. Drink, **characterised in that** it contains:
a) at least 50% by weight of Jerusalem artichoke juice,
b) at least 1% by weight of a flavour carrier for concealing the flavour of cynarin,
c) from 0.5 to 7% by weight of silicic acid or silicic acid derivatives.

2. Drink according to claim 1, **characterised in that** the flavour carrier for concealing the flavour of cynarin is selected from the group comprising fruit syrups, concentrated fruit juices, fruit pulp, fruit juices and hazelnut syrup.

3. Drink according to claim 2, **characterised in that** the flavour carrier for concealing the flavour of cynarin is selected from the group comprising pulp or juice of red fruits, concentrated apple juice, concentrated pear juice and lemon juice.

4. Drink according to any one of claims 1 to 3, **characterised in that** it contains from 1 to 15% by weight, preferably from 2 to 10% by weight, of a flavour carrier for concealing the flavour of cynarin.

5. Drink according to any one of claims 1 to 4, **characterised in that** the proportion of Jerusalem artichoke juice is from 50 to 90% by weight, more preferably from 60 to 90% by weight, more preferably from 70 to 90% by weight, more preferably from 80 to 90% by weight.

6. Drink according to any one of claims 1 to 5, **characterised in that** it additionally contains Jerusalem artichoke syrup.

7. Drink according to claim 6, **characterised in that** the proportion of Jerusalem artichoke syrup is from 1 to 15% by weight, preferably from 2 to 10% by weight, more preferably from 2 to 5% by weight.

8. Drink according to any one of claims 1 to 7, **characterised in that** it contains from 1 to 5% by weight of siliceous earths or silica gels.

9. Drink according to any one of claims 1 to 8, **characterised in that** it additionally contains Jerusalem artichoke pomace.

10. Drink according to claim 9, **characterised in that** the proportion of Jerusalem artichoke pomace is from 5 to 20% by weight, preferably from 5 to 10% by weight.

11. Drink according to claim 9 or 10, **characterised in that** the Jerusalem artichoke pomace is finely ground.

## Revendications

1. Boisson, **caractérisée en ce qu'**elle contient :
a) au moins 50 % en poids de jus de topinambour,
b) au moins 1 % en poids d'un exhausteur de goût destiné à masquer le goût de la cynarine,
c) 0,5 à 7 % en poids de silice ou de dérivés de silice.

2. Boisson selon la revendication 1, **caractérisée en ce que** l'exhausteur de goût destiné à masquer le goût de la cynarine est choisi dans le groupe constitué par les sirops de fruits, les concentrés de jus de fruits, la pulpe de fruits, les jus de fruits et le sirop de noisette.

3. Boisson selon la revendication 2, **caractérisée en ce que** l'exhausteur de goût destiné à masquer le goût de la cynarine est choisi dans le groupe constitué par la pulpe ou le jus de fruits rouges, le concentré de jus de pommes, le concentré de jus de poires et le jus de citrons.

4. Boisson selon l'une des revendications 1 à 3, **caractérisé en ce qu'**elle contient 1 à 15 % en poids, de préférence 2 à 10 % en poids d'un exhausteur de goût destiné à masquer le goût de la cynarine.

5. Boisson selon l'une des revendications 1 à 4, **caractérisé en ce que** la proportion du jus de topinambour est de 50 à 90 % en poids, plus préférablement de 60 à 90 % en poids, plus préférablement de 70 à 90 % en poids, plus préférablement de 80 à 90 % en poids.

6. Boisson selon l'une des revendications 1 à 5, **caractérisée en ce qu'**elle contient en outre du sirop de topinambour.

7. Boisson selon la revendication 6, **caractérisée en ce que** la proportion du sirop de topinambour est de 1 à 15 % en poids, de préférence de 2 à 10 % en poids, plus préférentiellement de 2 à 5 % en poids.

8. Boisson selon l'une des revendications 1 à 7, **caractérisée en ce qu'**elle contient 1 à 5 % en poids de silices ou de gels de silice.

9. Boisson selon l'une des revendications 1 à 8, **caractérisée en ce qu'**elle contient en outre du marc de topinambour.

10. Boisson selon la revendication 9, **caractérisée en ce que** la proportion du marc de topinambour est de 5 à 20 % en poids, de préférence de 5 à 10 % en poids.

11. Boisson selon la revendication 9 ou 10, **caractérisée en ce que** le marc de topinambour est finement broyé.
